# EUROPEAN PATENT APPLICATION

(11) **EP 3 659 686 A1**
(43) Date of publication of application: **03.06.2020**
(21) Application number: 18209255.1
(22) Date of filing: 29.11.2018
(51) Int. Cl.: B01D 3/06, B01D 3/14, C08F 2/06, C08F 6/06, C08F 6/10

(54) **SEPARATOR AND PROCESS FOR SEPARATING VOLATILE COMPOUNDS FROM A POLYMER SOLUTION**

(71) Applicant: Borealis AG, 1220 Vienna (AT)
(72) Inventor: AL-HAJ ALI, Mohammad, 06101 Porvoo (FI); SATTAR, Mubashar, 06101 Porvoo (FI)
(74) Representative: Kador & Partner PartG mbB

(57) **Abstract**

The present invention is concerned with a separator comprising a vessel, a first inlet, a second inlet, a first outlet, a second outlet, and a separation device located downstream of the first outlet, wherein the separation device comprises two outlets, whereas one outlet of the separation device is fluidly connected to the second inlet of the vessel. Furthermore, the present invention is also concerned with a process for separating hydrocarbons from a reaction solution comprising a polymer and said hydrocarbons, comprising the steps of passing the reaction solution through the first inlet into the separator according to the invention, withdrawing a first outlet stream through the first outlet, withdrawing a second outlet stream through the second outlet, separting the first outlet stream in the separation device to produce a first separated stream and a second separated stream, withdrawing the first separated stream from the separation device and passing the first separated stream through the second inlet into the vessel, and withdrawing the second separated stream from the separation device.

## Description

The present invention is concerned with a separator for separating volatile compounds from a polymer. Furthermore, the present invention is related to a process for separating volatile compounds from a polymer using said separator. In particular, the separator and the process can be used in solution polymerization or high pressure polymerization processes.

### Background

Polyolefins are produced by several different conventional technologies. Typical temperatures are from 50 to 350 °C and pressures vary from 30 to 3000 bars. The polyolefins are produced at a temperature in which the polymer is dissolved in a liquid or supercritical mixture of unreacted monomer, unreacted comonomers and optional solvents.

The polymerisation process includes one or more polymerisation reactors. Suitable reactors include unstirred or stirred, spherical, cylindrical and tank-like vessels and recirculating loop reactors and tubular reactors. Such reactors typically include injection points for monomer, comonomer, solvent, catalyst and optional other reactants and additives and withdrawal points for reaction mixtures. In addition the reactors may include heating or cooling means.

The separation of unreacted dissolved monomer(s), comonomer(s) and possible solvents from the reaction mixture comprising a polymer melt is commonly carried out in flash separator(s), typically carried out in one or more separation stages. In the solution process, a stream of a reaction solution withdrawn from the polymerisation reactor is passed to the flash separator where ethylene with or without comonomer (i.e., propylene, 1-butene, 1-hexene, 1-octene or combination of comonomers) and hydrocarbon solvent are separated from the polymer melt. If more than one flash separator is utilized, the flash separators are generally connected in series.

In high pressure processes, for making polyethelyene, the pressure of the reaction mixture at the reactor outlet, is decreased from its operating value of about 1000 to 3000 bar to a value of 100 to 300 bar via the operation of the exit let-down valve. The reaction mixture expansion caused by the let-down valve, results in a temperature increase of the outlet reaction stream (i.e., reverse Joule-Thompson effect). Subsequently, the reaction mixture is fed into a flash separator, also called high pressure separator, where the monomer/comonomer/polymer ternary mixture is split into a polymer stream, which is a polymer rich liquid phase, and a gaseous stream, which is a monomer(s)-rich gas phase. The polymer stream coming from the bottom of the flash separator is fed to a further flash separator for further removal of residual monomer(s). In the second flash separator, the pressure is further reduced. The gaseous stream, containing low molecular weight waxes, leaving the second flash separator (i.e., off gas) is fed to the primary compressor while the liquid bottom polymer stream is directed to the extruder for pelletization.

The first flash separator is commonly operated close at the thermodynamic equilibrium (i.e. at maximum separation efficiency of the dissolved volatile compounds for the given conditions (temperature and pressure)).

### Problem to be solved

When treating viscous reaction mixtures with a flash separator, the problem arises that high mass transfer resistances caused by high viscosities of the reaction mixture or solution require further increase of the separator efficiency. Hence, the first flash separator needs to provide a separation efficiency as close to the thermodynamic equilibrium as possible to decrease the content of volatile compounds in the final product to an acceptable level.

This is in particular important in case of low-density polymers, which need a high concentration of comonomers during production, which accordingly results in higher volatile compound contents in the polymer. Furthermore, this is important in case of polymerisation using comonomers having high molecular weight such as 1-octene or polar comonomers, as these are generally more difficult to separate from the reaction mixture.

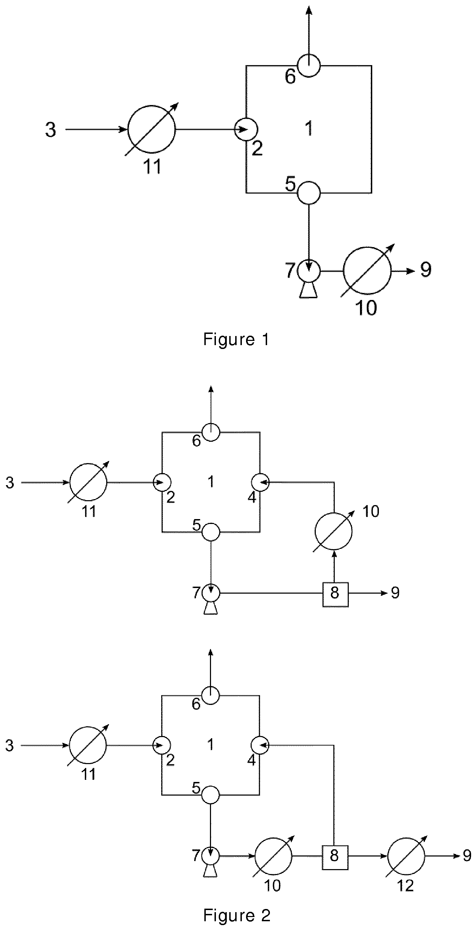

Figure 1 shows the layout of a flash separator as commonly used in the prior art. The bottom stream from the flash separator is optionally pumped through a mixing tank. Subsequently, the reaction mixture is heated up in a second heat exchanger before being transported to a second flash separator. This setup is necessary to achieve sufficient separation efficiency. However, such a process layout still might have the problem that reaction mixtures as explained above cannot be separated to an acceptable degree for certain applications.

One solution known from the prior art is to adjust the design of the flash separator in a way to reduce the size of the droplets formed during the flashing step. This enhances the surface area for mass transfer between the liquid and the gaseous phase and facilitates the evaporation of volatile compounds from the liquid phase into the gaseous phase, i.e. improves the separation efficiency. However, this solution has the drawback that too small droplets are entrained by the gaseous stream resulting again in a decrease of separation efficiency.

Another solution to this problem known from the prior art is to select either lower pressures or higher temperatures in the flash separator. However, both solutions can have negative effects on the operation of the flash separator in particular and the polymer production plant in general. In case of lower pressures, the gas velocity of the separated volatile compounds becomes higher. This results in higher probability of entrainment of droplets into the gaseous phase. On the other hand, increasing the separation temperature leads to phase separation e.g. in heat exchangers located upstream of the flash separator resulting in a decrase of the heat transfer efficiency. Finally, such an approach affords that the values for the pressure and the temperature need to be adjusted for each different grade produced in the plant.

Furthermore, in the prior art this problem was solved by an increase of the residence time of the reaction mixture in the flash separator. However, this method has the disadvantage that bigger flash separators need to be utilized to ensure keeping liquid level as low as possible to minimize liquid material entrainment.

### Object of the invention

Therefore, a solution to the problem of operating a separator in particular with viscous reaction mixtures avoiding the above-mentioned drawbacks is needed. In particular, a solution is needed, where no entrainment occurs and where no risk of phase separation of the reaction mixture is present.

It is one object of the invention to improve the separation of volatile compounds from a viscous reaction mixture, without introducing negative effects such as entrainment of liquid phase into the gaseous phase and/or phase separation in the heat exchanger.

In particular it is another object of the invention is to improve the separation of volatile compounds having a relatively high molecular weight (and which therefore are less volatile than volatile compounds having a lower molecular weight), such as the comonomer(s) used in polymerisation, from a viscous reaction mixture. It is relatively easy to separate small-size molecules such as ethylene. However, separation of bulky molecules, such as comonomers, typical examples of which are 1-octene and vinyl acrylate, from viscous reaction mixtures, in particular olefin copolymer melts or solutions, is challenging.

Another object of the present invention is to increase the mass transfer of volatile compounds by increasing the temperature of reaction mixture in the separator without having the negative effects such as e.g. phase separation for example in heat exchangers located upstream of the separator. In particular, it is an object of the present invention to selectively heat the gaseous part of the liquid/gaseous state of the reaction mixture in the separator.

A final object of this invention is a process with increased mass transfer area to efficiently separate volatile compounds from the highly-viscous polymer melt being prone to phase separation in the heat exchanger.

### Summary of the invention

The present invention is directed to a separator having a separation device being located subsequently to the first outlet of the separator, which divides the first outlet stream of the separator in a first separated stream and a second separated stream, whereas the first separated stream is optionally heated and returned to the separator. Such a setup can increase the separation efficiency with minimum risk of having a phase separation in the heat exchanger.

Therefore, the present invention provides a separator comprising a vessel (1), a first inlet (2), a second inlet (4), a first outlet (5), a second outlet (6), and a separation device (8) downstream of the the first outlet (2), wherein the separation device (8) comprises two outlets, whereas one outlet of the separation device (8) is fluidly connected to the second inlet (4) of the vessel (1).

The separator according to the present invention further preferably comprises a pump (7) located between the first outlet (5) of the vessel (1) and the separation device (8).

In another preferred embodiment of the invention, the separator according to the present invention comprises a recycling heater (10) located downstream of the first outlet (5), preferably downstream of the pump (7), and upstream of the second inlet (4) of the vessel (1), more preferably located downstream of the separation device (8) and upstream of the second inlet (4) of the vessel (1).

The separator according to the present invention preferably further comprises a reaction mixture heater (5) located upstream of the first inlet (2).

As seen from another aspect the present invention provides a process for separating hydrocarbons from a reaction solution comprising a polymer and said hydrocarbons, comprising the steps of passing the reaction solution (3) through the first inlet (2) into the vessel (1) according to the present invention, withdrawing a first outlet stream through the first outlet (5), withdrawing a second outlet stream through the second outlet (6), passing the first outlet stream through the separation device (8) to produce a first separated stream and a second separated stream, withdrawing the first separated stream from the separation device (8) and passing the first separated stream through the second inlet (4) into the vessel (1), and withdrawing the second separated stream from the separation device (8).

Preferably, the process according to the present invention further comprises the step of heating the reaction mixture (3) by the reaction mixture heater (11) before passing it to the vessel (1), whereby the separator comprises a reaction mixture heater (11).

Even more preferably, the process according to the present invention further comprises the step of heating the first separated stream by the recycling heater (10) before reintroduction into the vessel (1), wherein the separator comprises a recycling heater (10).

In a most preferred embodiment of the process according to the invention the first separated stream is heated to the temperature as provided in the vessel (1).

The process according to the invention preferably comprises the step of reducing the pressure of the reaction solution before introduction into the separator.

Preferably, the separator of the present invention is a flash separator.

Preferably, the first inlet (2) is located at the upper part of the separator. Furthermore, preferably, the first outlet (5) is located at the lower part of the separator. Moreover, preferably, the second outlet (6) is located at the upper part of the separator. It is in particular preferable that the first outlet (5) is located at the lower part of the separator and the first inlet (2) and second outlet (6) are located at the upper part of the separator, if the separator is a flash separator.

If the separator of the present invention is a flash separator, the first outlet stream preferably is the bottom stream and comprises the polymer-rich phase and the second outlet stream preferably is the top stream and comprises the polymer-lean phase.

The pressure used in the the process according to the invention within the separator, if the separator is a flash separator, is preferably from 0 to 500 barg. Moreover, the temperature used in the process according to the invention within the separator, if the separator is a flash separator is preferably from 100 to 400°C.

The polymer produced in the process according the invention is preferably an olefin copolymer. More preferably, the olefin copolymer of the process according to the invention is comprised from 10 to 50 wt% in the reaction solution.

In one preferred embodiment of the process according to the invention the olefin copolymer is preferably a low density polyethylene. More preferably the reaction mixture comprises ethylene and at least one polar comonomer. Most preferably, the polar comonomer is selected from the group consisting of alkyl-acrylates, of vinyl acetates, vinyl silanes, and mixtures thereof.

In another preferred embodiment of the process according to the invention the olefin copolymer is produced in a solution process. More preferably, the reaction mixture comprises an alpha-olefin.

### Definitions

Flash separators have been known in the prior art for decades (also as low pressure separators). As it is well known in the art the liquid feed is passed to a flash vessel operated at a reduced pressure. Thereby a part of the liquid phase vaporizes and can be withdrawn as an overhead stream (or a vapor stream) from the low pressure separator. The part remaining in liquid phase is then withdrawn as a bottom stream or a liquid stream from the flash vessel. Operating the low pressure separator under conditions such that both vapor and liquid phases are present in the flash vessel describes this situation. Flash separators are typically operated at a pressure of at least 1 bar.

The term separation efficiency as used herein is defined as the mass flow of the component withdrawn in the gaseous stream divided by the (theoretical) mass flow rate of the component in the gaseous stream in equilibrium conditions.

The expression volatile compounds as used herein has to be understood as compounds having significantly lower molecular weight in comparison to the polymer produced in the process of the invention. Such compounds typically are present in the gaseous form when being exposed to a flash separator. During polymerisation they remain in solution. Commonly, the volatile compounds comprise at least one unreacted monomer, optionally unreacted comonomer, solvent(s) and any other gaseous components present in the reaction mixture.

### Description of drawings

Fig. 1 is a schematic layout of a flash separator as commonly known from the prior art.
Fig. 2 show two schematic layouts of a separator according to the present invention, whereas the first layout is preferred.
Fig. 3 shows the variation in recovered volatile compounds from the bottom stream (first outlet stream) of the separator of Inventive Example 1 as a result of varying the split of bottom stream (first outlet stream) in the separation device (8).

### Reference signs

- 1: vessel
- 2: first inlet
- 3: reaction mixture
- 4: second inlet
- 5: first outlet
- 6: second outlet
- 7: pump
- 8: separation device
- 9: means attached to separator (e.g. second separator)
- 10: recycling heater
- 11: reaction mixture heater
- 12: product heater

### Detailed description

The separator and the separation process of the present invention shall be explained in the following in more detail.

### Separator of the present invention

The separator according to the present invention is an apparatus comprising a vessel (1) and several inlets and outlets (cf. Figure 2). The vessel (1) preferably has at least partially a generally cylindrical shape and is set up in vertical direction, e.g. the axis of the cylindrical part is parallel to the direction of the gravity. Thereby the separator has at least one section which has approximately a circular cross-section. In addition to the cylindrical section the separator may have additional sections, such as a bottom section, which may be conical, and a top section which may be hemispherical. Alternatively, the separator may also have cylindrical shape or a generally conical shape.

The separator according to the present invention furthermore comprises a first inlet (2). The first inlet (2) may contain baffles, plates or a static mixer. The first inlet is typically separated from the separator by walls. Preferably, the first inlet (2) is located at the upper part of the separator, most preferably at the top of the vessel (1). Preferably, the reaction mixture (3) is fed into the vessel via the first inlet (2).

Upstream to the first inlet (2) a reaction mixture heater (11) may be located to heat the reaction mixture (3) before entering the vessel (1).

Furthermore, the separator according to the present invention comprises a first outlet (5) for withdrawing the first outlet stream and a second outlet (6) for withdrawing the second outlet stream from the vessel (1). The first outlet (5) is preferably located in the lower part of the separator, most preferably at the bottom of the vessel (1). The second outlet (6) is preferably located in the upper part of the separator, most preferably at the top of the vessel (1).

The separator according to the present invention further preferably comprises a pump (7) located between the first outlet (5) of the vessel (1) and the separation device (8). More preferably, this pump is a melt pump. The separator according to the present invention comprises a separation device (8), which is located downstream of the first outlet (5), preferably downstream of the pump (7). The separation device (8) itself has two outlets, wherein one outlet of the separation device is fluidly connected to a second inlet (4) of the vessel (1) by a conduit (13).

Preferably, the recycling heater (10) is located downstream of the separation device and upstream of the second inlet (4). If the recycling heater is located downstream of the first outlet (5) and the separation device (8), phase separation might more likely occur. This depends on the high polymer content generally found in the first outlet stream of the vessel (1). After the separation device (8), the first separated stream being introduced back into the vessel might have less polymer content resulting on lower separation tendency. If the recycling heater (10) is located upstream of the separation device (8), preferably a production heater (12) is placed between the separation device (8) and downstream equipment for further processing of the product (9).

The separation device can be a simple line branching. In this case, no differentiation can be made in the composition of the first and the second separated streams. Hence, part of the polymer is reintroduced into the separator. Such a setup has the disadvantage that more polymer is introduced into the first separated stream being fed back to the vessel. However, such a setup has the advantage of simplicity and less blockage of the separation device.

Therefore, in a more preferred embodiment, the separation device is a filter, in which the polymer is filtered off the first outlet stream of the vessel. Such a setup ensures minimal entrainment of polymer into the first separated stream. Hence, in this more preferred embodiment, the first separated stream can be heated as high as the solvent allows, preferably as high as the vessel temperature is or even higher. Hence, a most preferred embodiment includes a filter as a separation device and a recycling heater being located downstream of the filter.

The recycling heater (10) and reaction mixture heater used in the present invention can be (a) flash heater(s), (a) jacketed pipe(s) or (a) heat exchanger(s). Preferably, the recycling heater (10) and/or the reaction mixture heater are heat exchangers.

The polymer produced in the process according the invention is preferably an olefin copolymer. More preferably, the olefin copolymer of the process according to the invention is comprised from 10 to 50 wt% in the reaction solution.

### Process of the present invention

The process of the present invention comprises a production process, preferably a production process for a polymer, a process step for preparing the reaction mixture produced by the production process for the separation process and the actual separation process, in which volatile compounds are removed from the reaction mixture. These steps are described in detail in the following.

### Production of the reaction mixture

Preferably, the production process comprises a high pressure polymerisation process or a solution polymerisation process. Most preferably, the production process comprises a solution polymerisation process.

In a preferred embodiment of the invention, the polymer produced by the production process of the present invention is an olefin polymer, preferably an olefin copolymer and most preferably, an alpha-olefin copolymer. In a further preferred embodiment of the present invention, the polymer produced by the process of the invention is a low density polyethylene.

### High pressure polymerization process

The polymer, preferably olefin copolymer, can be produced in a high pressure polymerisation process, where an olefin, typically ethylene, is polymerised or copolymerised by a radical polymerisation process. The process comprises a primary and a high-pressure compressor, a preheater and a polymerization reactor, typically an autoclave reactor (e.g. a continuous stirred tank reactor) or a tubular reactor. Optional comonomers and chain transfer agent(s) are added prior the high-pressure compressor. For starting the polymerisation reactions initiators are added after the preheater and along the reactor for starting and maintaining the highly exothermic polymerization reaction.

In the tubular reactor the highly exothermic polymerization reaction is carried out under supercritical conditions, e.g. between 1000 and 3500 bar, preferably between 1800 and 3400 bar, and especially preferably between 2000 and 3300 bar.

The tubular reactor comprises at least one cooling jacket. Typically the tubular reactor tubes have a length between 500 and 4000 m, preferably between 1500 and 3000 m, more preferably between 2000 and 2500 m. The operating temperature in the reactor varies between 100 and 350 °C, whereby the temperature forms a profile along the length of the reactor. In particular the temperature is between 165 and 340 °C, more particularly between 165 and 320 °C.

The autoclave reactor is operating above critical pressure, in particular between 500 and 3000 bar, specifically between 1000 and 2500 bar, more specifically between 1200 and 2000 bar. The operating temperature is between 100 and 340 °C.

Typical optional comonomers are octadiene (OD), vinyl acetate (VA), meth acrylates, in particular methyl acrylate (MA), ethyl acrylate (EA), butyl acrylate (BA), methyl methacrylate (MMA), acrylic acid (AA), methacrylic acid (MAA), vinyl tri methoxy silane (VTMS), vinyl tri ethoxy silane (VTES), glycidyl methacrylate (GMA), maleic anhydride (MAH), carbon monoxide, acrylamide, gamma-metha acryloxy propyl tri methoxy silane and / or gamma-metha acryloxy propyl tri ethoxy silane and mixtures thereof.

Typical chain transfer agents are propionaldehyde (PA), propylene, propane, methyl ethyl ketone and isopropanol and/or hydrogen.

Typically the content of the polymer in the reaction mixture, comprising the polymer and the unreacted monomer and comonomer, is from 10 to 50 wt%, preferably from 10 to 40 wt%, more preferably from 10 to 35 wt%.

If the separator is a flash separator, the stream of the reaction mixture withdrawn from the polymerisation reactor, the reaction mixture stream, is usually throttled to a pressure between 100 and 300 bar, preferably 220 to 270 bar and passed to the flash separator.

### Solution polymerisation process

The polymer, preferably olefin copolymer, can also be produced in a solution polymerisation process. In solution polymerisation processes the monomer is polymerised at a temperature in which the polymer is dissolved in the solvent mixture which is present in the process.

The process includes one or more polymerisation reactors. Suitable reactors include unstirred or stirred, spherical, cylindrical and tank-like vessels and recirculating loop reactors and tubular reactors. Such reactors typically include feeding points for monomer, optional comonomer, solvent, catalyst and optional other reactants and additives and withdrawal points for polymer solutions. In addition the reactors may include heating or cooling means.

Typically the solution polymerisation process is a high temperature solution polymerisation process, using a polymerisation temperature of greater than 100 °C. Preferably the polymerisation temperature is at least 110 °C, more preferably at least 150 °C. The polymerisation temperature can be up to 250 °C. The pressure in the solution polymerisation process is preferably in a range of from 30 to 200 bar, preferably from 50 to 150 bar and more preferably from 60 to 150 bar.

The monomer is preferably an olefin monomer. More preferably the olefin monomer is selected from the group consisting of ethylene, propylene, 1-butene, most suitable ethylene.

Preferably also a comonomer is used in the polymerisation. When the monomer is an olefin monomer as disclosed above, then the comonomer is different from the olefin monomer and is selected from the group consisting of linear and cyclic olefins and diolefins having from 2 to 12 carbon atoms and the mixtures thereof. More preferably, the comonomer is an alpha-olefin different from the olefin monomer and is selected from the group consisting of linear olefins having from 2 to 12 carbon atoms and mixtures thereof, preferably 4 to 10 carbon atoms, most preferably 1-octene.

The polymerisation is typically conducted in the presence of an olefin polymerisation catalyst. Such olefin polymerisation catalysts comprise a transition metal compound, preferably a metal compound of group 4, such as a compound of titanium, zirconium or hafnium.

The transition metal compound may be a halide of the transition metal, such as a trihalide or a tetrahalide. Typically the transition metal halide is a titanium halide, such as titanium trichloride or titanium tetrachloride.

The transition metal compound may also be a transition metal alkyl or transition metal alkoxide compound. Such compounds are often contacted with a chlorinating compound, such as an alkyl chloride.

The transition metal compound may be combined with a group 2 metal halide, such as magnesium halide, like magnesium dichloride, and/or with a group 13 metal halide, such as aluminium or boron halide, like aluminium trichloride. Such catalysts are well known in the art and are referred to as Ziegler-Natta catalysts. A Ziegler-Natta catalyst is typically used in combination with a cocatalyst, such as an aluminium alkyl.

The transition metal compound may also be a compound comprising an organic ligand having a cyclopentadienyl structure, such as cyclopentadienyl, fluorenyl or indenyl. Such organic ligands may also bear substituents. The transition metal may have one or two such organic ligands, which optionally are bridged, and two or three other ligands, such as alkyl, aryl or halide. Such catalysts are also well known in the art and are referred to as metallocene catalysts.

In solution polymerisation process a solvent is also present. The solvent is in liquid or supercritical state in the polymerisation conditions. The solvent is typically and preferably a hydrocarbon solvent. The liquid hydrocarbon solvent used is preferably a C₅-₁₂-hydrocarbon which may be unsubstituted or substituted by C₁-₄ alkyl group such as pentane, methyl pentane, hexane, heptane, octane, cyclohexane, methylcyclohexane and hydrogenated naphtha. More preferably unsubstituted C₆-₁₀-hydrocarbon solvents are used.

Also other components may be added into the reactor. It is known to feed hydrogen into the reactor for controlling the molecular weight of the polymer formed during the polymerisation. Also the use of different antifouling compounds is known in the art. In addition different kinds of activity boosters or activity retarders may be used for controlling the activity of the catalyst.

Typically the content of the polymer in the reaction mixture comprising the solvent, the polymer and the unreacted monomer and optionally comonomer is from 10 to 50 wt%, preferably from 10 to 40 wt%, more preferably from 10 to 35 wt%.

### Preparation of the reaction mixture

The stream of the reaction mixture (3) is the feed stream to the separator. It may be the product stream from the polymerisation reactor, as discussed above. The reaction mixture stream then typically has the polymer content, composition temperature and pressure as disclosed above.

The reaction mixture comprises the polymer, at least one unreacted monomer, and optionally at least one unreacted comonomer. Depending on the polymerisation process the reaction mixture may further comprise at least one solvent as discussed above.

In one preferred embodiment of the present invention, the reaction mixture comprises ethylene and at least one polar comonomer. More preferably, the polar comonomer is selected from the group consisting of alkyl-acrylates, of vinyl acetates, vinyl silanes, and mixtures thereof.

In another preferred embodiment the olefin copolymer is a plastomer, preferably an ethylene copolymer and produced in a solution polymerisation process. In this embodiment, the reaction mixture comprises ethylene, an alpha-olefin comonomer and a solvent.

According to one preferred embodiment of the invention the reaction mixture comprises 10 to 50 wt% of the olefin copolymer, preferably from 10 to 40 wt%, more preferably from 10 to 35 wt%.

The reaction mixture stream (3) is preferably heated prior to its entry to the separator. The heating may be achieved by passing the solution through the reaction mixture heater (11), which may be one or more flash heaters, one or more jacketed pipes, or one or more heat exchangers located upstream of the vessel (1) of the separator. The reaction mixture is preheated before entering the separator to enhance the separation of different volatile compounds, i.e. monomer, comonomer and the solvent. In the case of high pressure polymerization process, the pressure of the reaction mixture is preferably reduced before being fed to the separator.

Preferably, a static mixer is placed upstream of the separator to improve the homogeneity of the reaction mixture.

### Separation process

The volatile compounds are removed from the polymer solution in one or more separators. Preferably, more than one separator is coupled in series. In the first separator, the pressure is reduced and thereby the volatile compounds are at least partially removed from the reaction mixture.

In a preferred embodiment, the separator used in the separation process is a flash separator.

The reaction mixture (3) enters the separator through the first inlet (2) located at the upper part of the separator. The reaction mixture travels downwards into the vessel (1) while the volatile compounds, which evaporate, travel upwards. This facilitates the removal of the volatile compounds from the reaction mixture (3). The second outlet stream is withdrawn through the second outlet (6), while the first outlet stream is withdrawn through the first outlet (5).

If the separator is a flash separator, the pressure in the flash separator is during operation typically from 1 to 500 bar, preferably 1.5 to 450 bar, more preferably 2 to 400 bar, even more preferably 3 to 300 bar and most preferably 150 to 300 bar.

If the separator is a flash separator, the temperature in the flash separator is during operation typically from 100 to 400 °C, preferably 130 to 300 °C, more preferably 160 to 275 °C. The temperature should be sufficiently high to keep the viscosity of the solution at a preferably low level that enhances the separation of the hydrocarbones, but below the temperature at which the polymer is degraded.

If the separator of the present invention is a flash separator, the first outlet stream preferably is the bottom stream and comprises the polymer-rich phase and the second outlet stream preferably is the top stream and comprises the polymer-lean phase.

According to the present invention volatile compounds are removed from the reaction mixture (3) in at least one separation step. It is thus possible to remove the volatile compounds in two or more separation steps where each separation step is conducted in a dedicated separator.

The separator receives the reaction mixture stream (3) and removes the bulk of volatile compounds. The first outlet stream comprising the polymer is withdrawn from the separator and is passed through a separation device (8) thereby yielding a first separated stream and a second separated stream. The first separated stream and therefore parts of the volatile compounds and polymer are recycled back to the vessel (1) via the second inlet (4) located at the vessel (1).

In one embodiment of the invention, the separation device (8) is a simple line branching resulting in two streams with the same composition. In a more preferred embodiment of the invention, the first outlet stream is passed through a filter. In this preferred embodiment the first separated stream comprises mainly solvent and the second separated stream is comprises mainly polymer. In a most preferred embodiment, the first separated stream does not contain polymer.

Preferably, the first separated stream, and hence the volatile compounds and optionally polymer, is heated before entering the vessel (1) by passing through the recycling heater (10). Preferably, the first separated stream is heated to a temperature of 10 to 100 °C above the temperature in the vessel (1). Even more preferably, the first separated stream is heated to a temperature of 250 °C to 300 °C. Most preferably, the first separated stream is heated to a temperature as provided in the vessel (1). This step additionally enhances the mass transfer in the separator. In particular, this step ensures that the reaction mixture (3) is heated up in the vessel (1) after it had passed the reaction mixture heater (11) located before the first inlet (2) of the separator. This ensures that no phase separation occurs before the reaction mixture enters the vessel as long as the pressure is kept high enough.

Furthermore, the removal of polymer from the first outlet stream of the separator by the filter (8) in a preferred embodiment of the present invention makes it possible to heat the first separated stream to higher temperatures since phase separation is not expected due to the low concentration of polymer in the solution, which is fed back to the reactor.

The second separated stream can then be passed to a secondary separator, in which a further quantity of the volatile compounds is removed. As it is well understood by the person skilled in the art, the pressure in each downstream flash separator is less than in the upstream flash separator. Preferably, a first separator is followed by a second separator.

In case of multiple separators any one or all of the separators may be arranged to operate according to the present invention, i.e. having a separation device (8) having two outlets, a second inlet (4), whereas one outlet of the separation device (8) is is fluidly connected to the second inlet (4) of the vessel (1) optionally having a recycling heater (10). The invention, however, achieves the most significant benefit in the first separator since the amount of volatile compounds is the highest and the viscosity of the reaction mixture (3) is the lowest that makes solution flow relatively easier. Most preferably, the process of the present invention is conducted using a first separator according to the present invention and a second separator as commonly known from the prior art (e.g. without the separation device (8)). The disadvantage of having more than two separators is that the energy consumption of the plant increases as well as the complexity and, hence, error susceptibility. Moreover, it also increases investment and operating costs. Therefore, it is preferred to conduct the separation in two separators.

When multiple separators are used for removing the volatile compounds from the reaction mixture the polymer content in the first outlet stream withdrawn from the first separator is typically from 35 to 99 wt%. The volatile compounds can be further removed in one or more downstream separators. In other words, the polymer stream withdrawn from the first separator comprises from 1 to 65 wt% of residual volatile compounds.

By using the separator according to the present invention it is possible to achieve further improved separation efficiency of the components of the reaction mixture. For instance, the separation efficiency for unreacted monomer, such as ethylene, and also solvent, such as hydrocarbon solvent (as described above), and unreacted comonomer(s), such as alpha-olefins, i.e. propylene, 1-butene, 1-octene, or mixtures thereof, and polar comonomers, preferably octadiene (OD), vinyl acetate (VA), meth acrylates, in particular methyl acrylate (MA), ethyl acrylate (EA), butyl acrylate (BA), methyl methacrylate (MMA), acrylic acid (AA), methacrylic acid (MAA), vinyl tri methoxy silane (VTMS), vinyl tri ethoxy silane (VTES), glycidyl methacrylate (GMA), maleic anhydride (MAH), carbon monoxide, acrylamide, gamma-metha acryloxy propyl tri methoxy silane and/or gamma-metha acryloxy propyl tri ethoxy silane is at least 60 wt% and preferably at least 70 wt%.

The residual volatile compounds eventually remaining in the polymer after the downstream separator may be removed, as it is known in the art, by suitable venting arrangements in the extruder. In such methods volatile compounds are removed from the extruder via one or more vent ports. Venting is preferably combined with stripping by using, for instance, water, nitrogen or carbon dioxide as stripping gas. Venting of volatile compounds from the extruder is well known in the industry and is discussed, for instance, in the book of Chris Rauwendaal: 'Polymer Extrusion', Carl Hanser Verlag, Munich 1986, in paragraphs 8.5.2 and 8.5.3.

Also other methods known in the art for removing the residual volatile compounds from the polymer may be used. Such methods may be used instead of the above-mentioned methods of secondary separation and venting in an extruder, or alternatively they can be used in combination with either one or both of them.

### Examples

### Reference Example 1

In a solution polymerisation reactor ethylene and a comonomer are polymerised in a C₆-hydrocarbon solvent. From the reactor a solution stream is withdrawn at an approximate rate of 56 ton/h, containing 20% by weight of the ethylene copolymer dissolved therein. The solution stream is fed into a flash vessel where it is split into a gaseous top stream (second outlet stream) and a liquid bottom stream (first outlet stream) which are withdrawn from the separator from the top and bottom of the vessel, respectively. The corresponding results are summarized in Table 1 below. Reference Example 1 exemplifies the flash separation conditions usually found in the prior art, e.g. without any filter, conduit, second inlet and optional heater.

Table 1 below shows the conditions for the feed to the first flash separator. The total flow rate fed to the flash separator is around 56 ton/hr at a temperature of 215 °C and a pressure 5.5 barg, respectively.

**Table 1**

| | | **Feed** | **Top stream** | **Bottom stream** |
|---|---|---|---|---|
| **Total flow** | [kg/hr] | 56382 | 32604 | 23778 |
| **Polyethylene** | [wt%] | 20 | 0 | 52 |
| **Volatile comp.** | [wt%] | 80 | 100 | 48 |

It can be seen from the values of the compounds to be found in the gaseous top stream and the liquid bottom stream that no entrainment of polymer into the gaseous top stream occurs. Furthermore, the separation of the volatile and non-volatile compounds is with ∼ 50:50 not very good.

### Inventive Example 1

In this example, the same flash separation has been conducted as in Reference Example 1. However, the bottom stream (first outlet stream), which is a polymer-rich stream withdrawn from the flash separator, is withdrawn by a melt pump, subsequently led through a filter and the polymer is removed forming a first separated stream and a second separated stream. This first separated stream is heated up to 275 °C and is reintroduced to the flash vessel.

It should be noted that with decreasing polymer concentration in the first separated stream the phase separation temperature of the composition of the first separated stream is shifted towards higher values. This enables heating the first separated stream to higher temperatures, which enhances the separation in the flash separator.

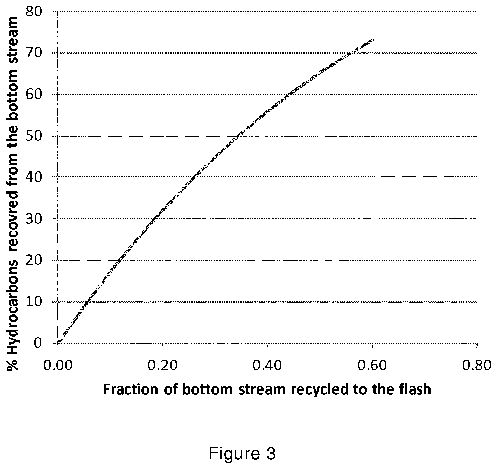

As can be seen in Fig. 3, the amount of the first separated stream, given as a fraction of the bottom stream (first outlet stream) of the flash separator and reintroduced into the flash vessel, influences the efficiency of the separation of the overall flash process. Hence, in this example, the amount of the first separated stream has been varied and the amount of recovered volatile compounds (hydrocarbons) from the bottom stream (first outlet stream) of the flash separator caused by the recycling has been determined.

The embodiment having a first separated stream of 0.0 resembles the situation of Reference Example 1. Hence, no separation and recycling is achieved and the entire bottom stream (first outlet stream) of the flash separator is passed to the next process step (e.g. a second flash separator).

Consequently, the values indicating the removal of volatile compounds (hydrocarbons) are given with respect to the removal of volatile compounds in the Reference Example 1.

As an example, when 40 wt% of the bottom stream (first outlet stream) is recycled back to the flash vessel, around 56% reduction in mass of the liquid hydrocarbon in the bottom stream (first outlet stream) of the separator can be achieved. This results in reducing the hydrocarbons fed to the recovery unit by about 6.5 tons/hr. This reduction makes it possible to use two separators instead of three or reduce the size of the second and third separators while still having comparable values of volatiles in the polymer.

## Claims

1. A separator comprising
a. a vessel (1),
b. a first inlet (2),
c. a second inlet (4),
d. a first outlet (5),
e. a second outlet (6), and
f. a separation device (8) located downstream of the first outlet (5),
wherein the separation device (8) comprises two outlets, whereas one outlet of the separation device (8) is fluidly connected to the second inlet (4) of the vessel (1).

2. The separator according to claim 1 further comprising a pump (7) located between the first outlet (5) of the vessel (1) and the separation device (8).

3. The separator according to claim 1 or 2 further comprising a recycling heater (10) located downstream of the first outlet (5) and upstream of the second inlet (4) of the vessel (1).

4. The separator according to claim 3, wherein the recycling heater (10) is located downstream of the separation device (8) and upstream of the second inlet (4) of the vessel (1).

5. The separator according to one of claims 1 to 4 further comprising a reaction mixture heater (11) located upstream of the first inlet (2).

6. The separator according to one of the preceding claims, wherein the separation device (8) is selected from a list consisting of a line branching or a filter.

7. The separator according to claim 6, wherein the separation device (8) is a filter.

8. A process for separating hydrocarbons from a reaction solution comprising a polymer and said hydrocarbons, comprising the steps of:
- passing the reaction mixture (3) through the first inlet (2) into the separator according to any of claims 1 to 7,
- withdrawing a first outlet stream through the first outlet (5),
- withdrawing a second outlet stream through the second outlet (6),
- passing the first outlet stream through a separation device (8) to produce a first separated stream and a second separated stream (11),
- withdrawing the first separated stream from the separation device (8) and passing the first separated stream through the second inlet (4) into the vessel (1), and
- withdrawing the second separated stream from the separation device (8).

9. The process according to claim 8, wherein the first outlet stream is a polymer-rich stream and the second outlet stream is a polymer-lean stream.

10. The process according to claim 8 or 9, wherein the first seperated stream comprises mainly solvent and the second separated stream comprises mainly polymer.

11. The process according to claims 8 to 10, wherein the separator is a separator according to one of claims 3 to 7, further comprising the step of
- heating the first liquid-solid stream by the recycling heater (10) before reintroduction into the vessel (1) via second inlet (4).

12. The process according to claims 8 to 11, wherein the separator is a separator according to one of claims 5 to 7 comprising a reaction mixture heater (11), further comprising the step of
- heating the reaction mixture (3) by the reaction mixture heater (11) before passing it to the vessel (1) via the first inlet (2).

13. The process according to any one of claims 8 to 12 wherein the first separated stream is heated to the temperature as provided in the vessel (1).

14. The process according to any one of claims 8 to 13 comprising the step of reducing the pressure of the reaction solution before introduction into the separator.

15. The process according to anyone of claims 8 to 14 wherein the pressure within the separator is from 0 to 500 barg.
